(19)

Europäisches
Patentamt

European
Patent Office

Office européen
des brevets

(11) **EP 1 959 552 B1**

(12) **EUROPÄISCHE PATENTSCHRIFT**

(45) Veröffentlichungstag und Bekanntmachung des
Hinweises auf die Patenterteilung:
**10.03.2010   Patentblatt 2010/10**

(51) Int Cl.:
*H02M 7/5387* (2007.01)

(21) Anmeldenummer: **08100841.9**

(22) Anmeldetag: **23.01.2008**

(54) **Verfahren und Vorrichtung zum Betreiben einer elektrischen Maschine**

Method and device for operating an electric machine

Procédé et dispositif destinés au fonctionnement d'une machine électrique

(84) Benannte Vertragsstaaten:
**DE FR**

(30) Priorität: **16.02.2007   DE 102007007851**
**12.04.2007   DE 102007017296**

(43) Veröffentlichungstag der Anmeldung:
**20.08.2008   Patentblatt 2008/34**

(73) Patentinhaber: **Continental Automotive GmbH**
**30165 Hannover (DE)**

(72) Erfinder: **Hexamer, Bernd Dr.**
**55566 Meddersheim (DE)**

(56) Entgegenhaltungen:
**JP-A- 4 008 192     JP-A- 2004 208 397**
**US-A- 5 442 268     US-A- 5 998 880**

## Beschreibung

Die Erfindung betrifft ein Verfahren und eine Vorrichtung zum Betreiben einer elektrischen Maschine. Elektrische Maschinen können sowohl in einem Motorbetrieb als auch in einem Generatorbetrieb eingesetzt werden. So sind beispielsweise Synchronmaschinen bekannt mit einem Stator, dem drei Wicklungsstränge zugeordnet sind, und einem Rotor.

Synchronmaschinen finden Einsatz im Bereich der Automobiltechnik, wo sie beispielsweise für Lenksysteme von Kraftfahrzeugen eingesetzt werden. Synchronmaschinen können mit Permanentmagneten auf dem Rotor ausgestaltet sein. Sie können jedoch auch mit Erregerwicklungen in dem Rotor ausgestattet sein. Synchronmaschinen können als Schenkelpolmaschinen ausgebildet sein, bei denen der Rotor ein Polrad hat mit ausgeprägten Polen. Die Synchronmaschine kann jedoch auch beispielsweise als Vollpolmaschine mit einem rotationssymmetrisch ausgebildeten Rotor ausgebildet sein.

Steuervorrichtungen, die ausgebildet sind zum Steuern der jeweiligen elektrischen Maschine, umfassen häufig einen Wechselrichter und können so eingangsseitig mit einem Gleichstrom und einer Gleichspannung beaufschlagt werden. Dies ist insbesondere bei dem Einsatz in einem Kraftfahrzeug von Vorteil, bei dem das Bordnetz eine Gleichspannung und einen Gleichstrom zur Verfügung stellt, wie z.B. im Dokument US 599 8 880, das eine Leitungsregelung mit Hilfe des Generatormodelles vorschlägt.

Die Aufgabe, die der Erfindung zugrunde liegt, ist ein Verfahren und eine Vorrichtung zum Betreiben einer elektrischen Maschine zu schaffen, das bzw. die einfach ist.

Die Aufgabe wird gelöst durch die Merkmale der unabhängigen Patentansprüche 1 und 10. Vorteilhafte Ausgestaltungen der Erfindung sind in den Unteransprüchen gekennzeichnet.

Die Erfindung zeichnet sich aus durch ein Verfahren und eine korrespondierende Vorrichtung zum Betreiben einer elektrischen Maschine, bei dem bzw. der ein Gleich-Eingangsstrom einer Steuervorrichtung, die der elektrischen Maschine zugeordnet ist, mittels eines Beobachters ermittelt wird abhängig von einer Wirkleistungsbilanzierung der elektrischen Maschine und der zugeordneten Steuervorrichtung und Modellierung des Gleichstromteils der Steuervorrichtung mittels eines ohmschen Widerstands und eines Wechselstromteils der Steuervorrichtung mittels jeweiliger ohmscher Widerstände. Auf diese Weise kann besonders einfach ein hinreichend präziser Schätzwert des Gleich-Eingangsstroms ermittelt werden, ohne dass ein eigener Stromsensor für diesen Zweck vorgesehen sein muss. Dadurch kann die Steuervorrichtung besonders kompakt ausgebildet sein.

Gemäß einer vorteilhaften Ausgestaltung umfasst die Wirkleistungbilanzierung einen Leistungsanteil,
der einen vorgegebenen Anteil einer Gleich-Eingangswirkleistung der Steuervorrichtung umfasst. Auf diese Weise können Verluste in einem Stellglied der Steuervorrichtung besonders einfach abgeschätzt werden, die insbesondere bei einem Laden und Entladen eines Zwischenkreiskondensators eines Wechselrichters des Stellgliedes auftreten können. Auf diese Weise ist der Leistungsanteil insbesondere repräsentiv für eine Verlust-Wirkleistung in dem Zwischenkreis.

Gemäß einer weiteren vorteilhaften Ausgestaltung wird der ohmsche Widerstand, der zur Modellierung des Gleichstromteils vorgesehen ist, abhängig von einer Temperatur ermittelt. Auf diese Weise kann eine besondere einfache Modellierung erfolgen.

In diesem Zusammenhang ist es besonderes vorteilhaft, wenn der jeweilige ohmsche Widerstand, der zur Modellierung des Wechselstromteils der Betriebsvorrichtung vorgesehen ist, abhängig von der Temperatur der Steuervorrichtung ermittelt wird. Auf diese Weise kann der ohmsche Widerstand besonders präzise ermittelt werden. Ferner wird der jeweilige ohmsche Widerstand, der zur Modellierung des Wechselstromteils der Betriebsvorrichtung vorgesehen ist, bevorzugt nichtlinear abhängig von der Temperatur der Steuervorrichtung ermittelt, was eine äußerst präzise Modellierung des Wechselstromteils der Betriebsvorrichtung ermöglicht, insbesondere im Hinblick auf einen Einsatz von Leistungs-MOSFET-Transistoren.

Gemäß einer weiteren Ausgestaltung wird der jeweilige ohmsche Widerstand, der zur Modellierung der elektrischen Maschine vorgesehen ist, abhängig von der Temperatur der elektrischen Maschine ermittelt. So kann eine präzise Modellierung der elektrischen Maschine selbst erfolgen.

Ausführungsbeispiele der Erfindung sind im Folgenden anhand der schematischen Zeichnungen näher erläutert. Es zeigen:

Figur 1     eine Anordnung aus einer Steuervorrichtung, einer elektrischen Maschine und einer Betriebsvorrichtung,

Figur 2     einen Beobachter, der ein Modell der Steuervorrichtung und der elektrischen Maschine zum Ermitteln eines Gleich-Eingangsstroms umfasst,

Figur 3     eine Strombegrenzungsanordnung,

Figur 4     verschiedene Gleichungen zur Herleitung einer Rechenvorschrift für den Beobachter und

Figur 5     ein Ablaufdiagramm.

Elemente gleicher Konstruktion oder Funktion sind figurenübergreifend mit den gleichen Bezugszeichen gekennzeichnet.

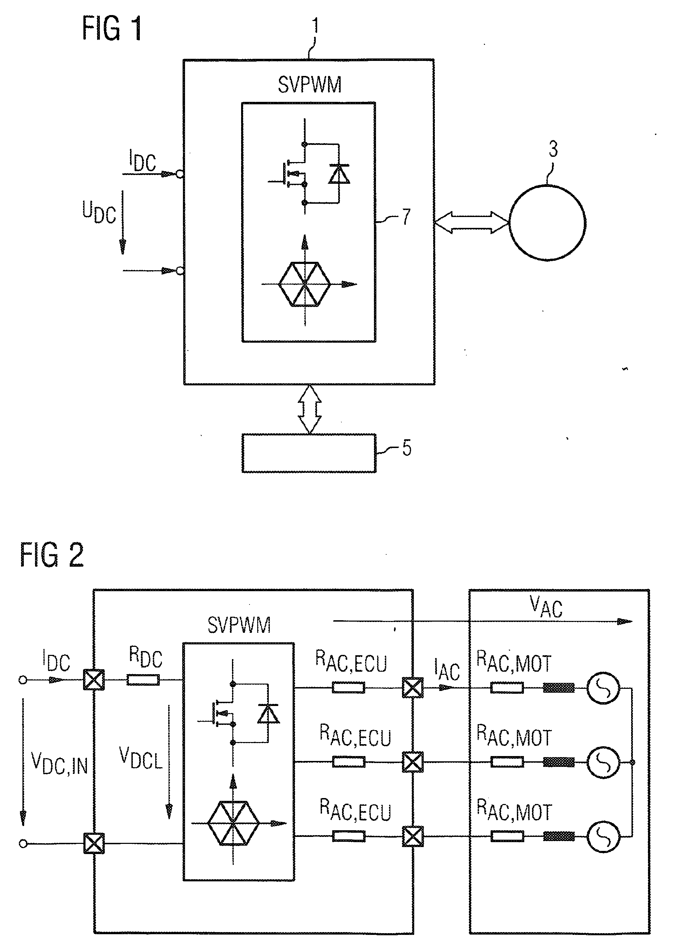

Eine Steuervorrichtung 1 (Figur 1) ist einer elektrischen Maschine 3 zugeordnet. Ferner ist eine Betriebsvorrichtung 5 vorgesehen zum Betreiben der Steuervorrichtung und somit der elektrischen Maschine 3. Die Betriebsvorrichtung 5 kann grundsätzlich separat von der Steuervorrichtung 1 ausgebildet sein, sie kann jedoch eine Baueinheit mit der Steuervorrichtung 1 bilden.

Die elektrische Maschine 3 kann beispielsweise eine Synchronmaschine sein. Sie kann jedoch grundsätzlich auch eine beliebige andere elektrische Maschine sein. Eine Synchronmaschine umfasst einen Stator mit drei Wicklungssträngen, die jeweils resultierend um 120° versetzt angeordnet sind. Die Synchronmaschine umfasst ferner einen Rotor, auf dem Permanentmagnete angeordnet sind. Der Rotor mit den Permanentmagneten kann rotationssymmetrisch - Vollpolläufer - oder mit ausgeprägten Polen - Schenkelpolläufer - ausgebildet sein. Der Stator umfasst ein dreiphasiges symmetrisches Wicklungssystem. Bevorzugt sind die Betriebsvorrichtung 5 und die Steuervorrichtung 1 ausgebildet eine feldorientierte Stromregelung zu realisieren. Dazu folgt eine Transformation der Ströme und Spannungen der elektrischen Maschine 3 in ein mit dem Rotor umlaufendes Koordinatensystem, ein d, q-Koordinatensystem. Diese Transformation wird als Clarke-Park-Transformation bezeichnet. Regelgrößen können hierbei beispielsweise die Drehgeschwindigkeit und auch der Drehwinkel des Rotors sein.

Bei einem d, q-Koordinatensystem fällt die d-Achse mit der Orientierung der jeweiligen Pole des Rotors zusammen, während die q-Achse senkrecht auf der d-Achse steht. Die d-Achse wird auch als reelle Achse und die q-Achse als imaginäre Achse bezeichnet.

Im Falle der Schenkelpolmaschine bildet sich aufgrund des ausgeprägten Pols in der direkten Achse des Polrades der Fluss hauptsächlich dort aus und macht so den Einsatz des d, q-Koordinatensystems besonders vorteilhaft.

Die Steuervorrichtung 1 wird bestimmungsgemäß eingangsseitig mit einem Gleich-Eingangsstrom $I_{DC}$ und einer Gleich-Eingangsspannung $U_{DC}$ beaufschlagt. Dazu kann sie an ein elektrisches Bordnetz eines Kraftfahrzeugs elektrisch angeschlossen sein.

Die Steuervorrichtung 1 umfasst eine Stellgliedeinheit 7. Die Stellgliedeinheit 7 umfasst bevorzugt einen Wechselrichter, der insbesondere als Dreiphasen-Wechselrichter ausgebildet ist und dem ein Raumzeiger-Pulsweitenmodulator zugeordnet ist und mittels dessen dann die Phasenströme für die einzelnen Motorstränge erzeugt werden.

Dem Wechselrichter ist ein Zwischenkreis zugeordnet, der einen Zwischenkreiskondensator umfasst, der elektrisch parallel zu der Bordnetzspannungsversorgung angeordnet ist.

Die Betriebsvorrichtung 5 umfasst einen Beobachter, mittels dessen ein Gleich-Eingangsstrom $I_{DC}$ ermittelt werden kann und zwar insbesondere ein Schätzwert $I_{DC,EST}$ des Gleich-Eingangsstroms.

Der Beobachter umfasst ein Modell (Figur 2) der elektrischen Maschine 3 und der Steuervorrichtung 1. Ein ohmscher Widerstand $R_{DC}$ modelliert einen Gleichstromteil der Steuervorrichtung und somit alle Komponenten, die durch den Gleich-Eingangsstrom $I_{DC}$ durchflossen werden.

Ein Wechselstromteil der Steuervorrichtung und der elektrischen Maschine 3 wird mittels jeweiliger ohmscher Widerstände modelliert. Durch sie werden hinsichtlich einer Wirkleistungsbilanzierung maßgeblich Verluste in Schaltelementen des Wechselrichters und in den jeweiligen Leitungen hin zu den Ausgängen der Steuervorrichtung modelliert.

Die Schaltelemente in dem Wechselrichter umfassen in diesem Zusammenhang insbesondere Leistungs-MOSFET-Transistoren. Ein besonderes präzises Modellieren ist möglich, wenn der ohmsche Widerstand $R_{AC,ECU}$ abhängig von einer Temperatur und zwar bevorzugt der Temperatur der Steuervorrichtung ermittelt wird. Dies erfolgt bevorzugt unter Berücksichtigung einer nicht-linearen Temperaturabhängigkeit, was das Verhalten von Leistungs-MOSFET-Transistoren besonders gut modelliert.

Zur Modellierung sind ferner ohmsche Widerstände $R_{AC,MOT}$ vorgesehen, mittels derer die elektrische Maschine 3 im Hinblick auf in ihr auftretende Verluste modelliert ist. Der ohmsche Widerstand $R_{AC,MOT}$ ist für jede Phase aufgetragen und ist ebenso für die verschiedenen Phasen gleich. Der ohmsche Widerstand $R_{AC,MOT}$ repräsentiert insbesondere den ohmschen Widerstand in den Wicklungen, insbesondere in Kupferwicklungen der elektrischen Maschine 3.

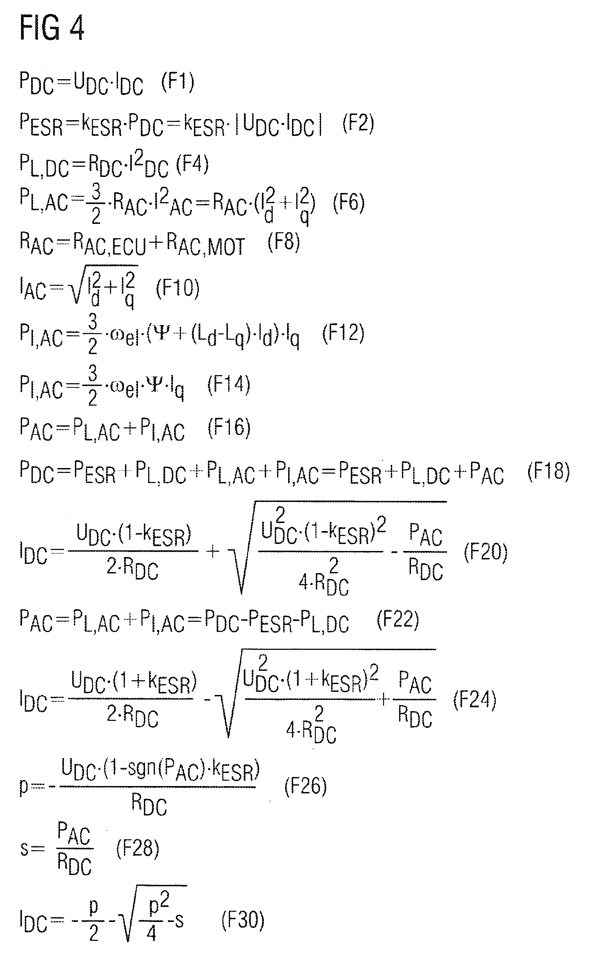

Ferner umfasst der Beobachter auch eine Modellierung einer inneren Wirkleistung $P_{I,AC}$ anhand mehrerer Parameter, welche weiter unten anhand der Figur 4 näher erläutert sind.

Im Folgenden wird anhand der Figur 4 der Beobachter näher erläutert. Der Beobachter umfasst eine Wirkleistungsbilanzierung, die im Folgenden noch näher erläutert ist.

Gleichung F1 gibt einen Zusammenhang zwischen einer Gleich-Eingangswirkleistung $P_{DC}$ und dem Gleich-Eingangsstrom $I_{DC}$ und der Gleich-Eingangsspannung $U_{DC}$ an.

Eine Gleichung F2 gibt eine Rechenvorschrift zum Ermitteln einer Gleich-Verbindungs-Verlust-Wirkleistung $P_{ESR}$ an, die insbesondere Verluste in dem Zwischenkreis modelliert, die maßgeblich hervorgerufen sind durch ein Laden und Entladen des Zwischenkreiskondensators. In diesem Zusammenhang hat sich gezeigt, dass die Gleich-Verbindungs-Verlust-Wirkleistung $P_{ESR}$ hinreichend genau aus einem Produkt eines Anteilsfaktors $k_{ESR}$ und der Gleich-Eingangswirkleistung $P_{DC}$ abgeschätzt werden kann. Der Anteilsfaktor $k_{ESR}$ kann insbesondere empirisch ermittelt werden und zwar durch entsprechende Versuche mit einer Anordnung aus dem der elektrischen Maschine 3 und der Steuervorrichtung 1.

Gleichung F4 gibt eine Rechenvorschrift zum Ermitteln einer Gleich-Verlust-Wirkleistung $P_{L,DC}$ vor und zwar abhängig von dem ohmschen Widerstand $R_{DC}$, der den Gleichstromteil der Steuervorrichtung 1 modelliert, und dem Gleich-Eingangsstrom $I_{DC}$.

Gleichung F6 gibt einen Zusammenhang wieder zum Ermitteln einer Wechsel-Verlust-Wirkleistung $P_{L,AC}$ abhängig von dem ohmschen Widerstand $R_{AC}$, der den Wechselstromteil der Steuervorrichtung die elektrische Maschine 3 modelliert und der gemäß der Gleichung F8 aus der Summe des ohmschen Widerstandes $R_{AC,ECU}$ und des ohmschen Widerstandes $R_{AC,MOT}$ ermittelt wird.

Der Wechselstrom $I_{AC}$ korrespondiert dabei zu einer Quadratwurzel aus einer Summe eines quadrierten d-Motorstroms $I_d$ und eines quadrierten q-Motorstroms $I_q$. Der d-Motorstrom $I_d$ und der q-Motorstrom $I_q$ können beispielsweise abgeleitet sein von Messsignalen entsprechender Stromsensoren zum Erfassen der jeweiligen Motorströme in den einzelnen Strängen (RST) der elektrischen Maschine, sie können jedoch auch Schätzwerte sein, die mittels eines geeigneten Modells ermittelt werden.

Die Beziehung zwischen den d-Motorstrom $I_d$ und dem q-Motorstrom $I_q$ einerseits und dem Wechselstrom $I_{AC}$ andererseits ist anhand der Gleichung F10 dargestellt.

F12 ist eine Gleichung für eine innere Wirkleistung $P_{I,AC}$, die abhängt von einer elektrischen Kreisfrequenz $\omega_{el}$, die sich aus einer Rotordrehzahl und einer Polpaarzahl der elektrischen Maschine ableitet, einem verketteten Fluss $\psi$, einer d-Motorinduktivität $L_d$, einer q-Motorinduktivität $L_q$ und den d-und q-Motorströmen $I_d$, $I_q$.

Die elektrische Kreisfrequenz $\omega_{el}$ wird bevorzugt von einem Messsignal eines Positionssensor abgleitet, der ein Drehwinkel des Rotors bezogen auf eine vorgegebene Bezugsmarke auf dem Stator erfasst und so die Drehgeschwindigkeit des Rotors relativ zu dem Stator ermittelt.

Der verkettete Fluss $\psi$ wird bevorzugt abhängig von einer Rotortemperatur ermittelt und zwar bevorzugt mit einer geeignet dazu vorgegebenen Kennlinie. Die Rotortemperatur wird bevorzugt abhängig von einer Wicklungstemperatur mittels eines entsprechenden Modells ermittelt, dass den Zusammenhang zwischen den beiden Größen abbildet. Das Modell ist bevorzugt durch entsprechende Versuche oder Simulationen ermittelt.

Die d-Motorinduktivität $L_d$ und die q-Motorinduktivität $L_q$ werden bevorzugt abhängig von aktuellen Werten des d-Motorstroms $I_d$ und des q-Motorstroms $I_q$ ermittelt. Die Gleichung F12 ist insbesondere anwendbar für eine Schenkelpolmaschine, die auch als Hybrid-Permanentsynchronmaschine (HyPMSM) bezeichnet wird.

Eine Gleichung F14 gibt einen Zusammenhang zum Ermitteln der inneren Wirkleistung $P_{I,AC}$ für eine Permanentsynchronmaschine wieder, die als Vollpolläufer ausgebildet ist.

Die innere Wirkleistung $P_{I,AC}$ repräsentiert die in der elektrischen Maschine in mechanische Leistung umgesetzte Leistung.

Gleichung F16 gibt den Zusammenhang zwischen einer Wechsel-Wirkleistung $P_{AC}$ und der inneren Wirkleistung $P_{I,AC}$ und der Wechsel-Verlust-Wirkleistung $P_{L,AC}$ wieder.

Gleichung F18 stellt dann eine die Wirkleistungsbilanzierung dar, wobei die Gleich-Eingangswirkleistung $P_{DC}$ gleich ist einer Summe aus der Gleich-Verbindungs-Verlust-Wirkleistung $P_{ESR}$, der Gleich-Verlust-Wirkleistung $P_{L,DC}$ und der Wechsel-Wirkleistung $P_{AC}$. Durch Einsetzen der Formeln F1 bis F16 in F18 und Auflösen nach dem Gleich-Eingangsstrom $I_{DC}$ ergibt sich die Gleichung F20, wobei die Gleichungen F18 und F20 den Zusammenhang für einen Motorbetrieb der elektrischen Maschine 3 wiedergeben.

Gleichung F22 gibt die Wirkleistungsbilanzierung wieder für den generatorischen Betrieb der elektrischen Maschine. Dementsprechend gibt dann die Gleichung F24 für den generatorischen Betrieb nach Einsetzen der Beziehungen F1 bis F16 in F22 und Auflösen dieser nach dem Gleich-Eingangsstrom $I_{DC}$ eine Rechenvorschrift zum Ermitteln des Gleich-Eingangsstrom $I_{DC}$ wieder.

Gleichung F30 gibt dann eine sowohl auf den generatorischen als auch den Motorbetrieb anwendbare Beziehung zum Ermitteln des Gleich-Eingangsstroms $I_{DC}$ wieder, wobei ein Platzhalter p durch die Gleichung F26 gegeben ist und ein Platzhalter s gegeben ist durch die eine Gleichung F28.

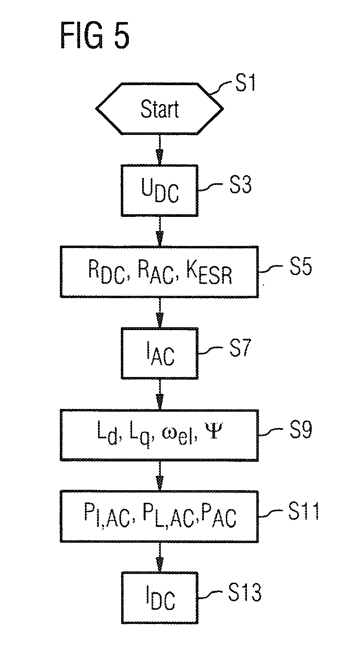

Bei dem Betrieb der elektrischen Maschine 3 wird in der Betriebsvorrichtung 5 ein Ablauf abgearbeitet, der im Folgenden anhand des Ablaufdiagramms der Figur 5 näher erläutert ist. Er kann als festverdrahtete Logik aber auch in Form eines Programms vorgesehen sein, das in einem Speicher der Betriebsvorrichtung gespeichert ist und in einer Recheneinheit während des Betriebs abgearbeitet wird.

In einem Schritt S1 erfolgt ein Start. In einem Schritt S3 wird die Gleich-Eingangsspannung $U_{DC}$ ermittelt. Dazu ist bevorzugt ein entsprechender Spannungssensor vorgesehen.

In einem Schritt S5 werden die ohmschen Widerstände $R_{DC}$ und $R_{AC}$ ermittelt. Diese können in einer besonders einfachen Ausführungsform fest vorgegeben sein, bevorzugt werden sie jedoch abhängig von einer Temperatur ermittelt. Dazu wird zum einen die Temperatur der Steuervorrichtung 1 ermittelt, was bevorzugt mittels eines geeigneten Sensors erfolgt und dann der ohmsche Widerstand $R_{DC}$ und/oder der ohmsche Widerstand $R_{AC,ECU}$ abhängig von der Temperatur der Steuervorrichtung 1 ermittelt.

Ferner wird bevorzugt eine Temperatur der elektrischen Maschine 3 ermittelt und zwar bevorzugt die Wicklungstemperatur. Abhängig von der Temperatur der elektrischen Maschine wird dann der ohmsche Widerstand $R_{AC,MOT}$ ermittelt. Der Widerstand $R_{AC}$ wird dann gemäß der Gleichung F8 ermittelt. Ferner wird in dem Schritt S5 der Anteilsfaktor $k_{ESR}$ ermittelt. Dieser ist bevorzugt fest vorgegeben. Er kann jedoch auch abhängig sein von einer beliebigen Größe und abhängig von dieser dann ermittelt werden.

In einem Schritt S7 werden der d-Motorstrom $I_d$ und der q-Motorstrom $I_q$ ermittelt und zwar, wie oben bereits erläutert, entweder abhängig von entsprechenden Messwerten der Strangströme in den einzelnen Strängen (r, s, t) oder auch mittels einer geeigneten Modellierung umfassend die Park-Transformation. Der Wechselstrom $I_{AC}$ wird dann mittels der Gleichung F10 ermittelt.

In einem Schritt S9 werden die d-Motorinduktivität $L_d$ und die q-Motorinduktivität $L_q$ ermittelt. Die d-Motorinduktivität $L_d$ und die q-Motorinduktivität $L_q$ werden bevorzugt abhängig von den d-, q-Motorströmen $I_d$, $I_q$ ermittelt. Die Geschwindigkeit $\omega_{el}$ wird abhängig von dem Messsignal des Positionssensors ermittelt.

Der verkettete Fluss $\psi$ wird bevorzugt abhängig von einer Rotortemperatur mittels einer geeignet vorgegebenen Kennlinie ermittelt, die durch Versuche oder Simulationen vorab ermittelt ist. Bevorzugt wird die Rotortemperatur abhängig von der Wicklungstemperatur mittels eines entsprechenden Modells ermittelt, das den Zusammenhang zwischen den beiden Größen abbildet. Auch dieses ist bevorzugt ebenso vorab durch entsprechende Versuche oder Simulationen ermittelt.

In einem Schritt S11 wird die innere Wirkleistung $P_{I,AC}$ abhängig von der Gleichung F12 oder F14 ermittelt und die Wechsel-Verlust-Wirkleistung $P_{L,AC}$ mittels der Gleichung F6 ermittelt. Die Wechsel-Wirkleistung $P_{AC}$ wird dann mittels der Gleichung F16 ermittelt.

In einem Schritt S30 wird der Gleich-Eingangsstrom $I_{DC}$ durch entsprechende Anwendung der Gleichung F30 ermittelt. Auf diese Weise kann so einfach ein Schätzwert $I_{DC,EST}$ des Gleich-Eingangsstroms ermittelt werden.

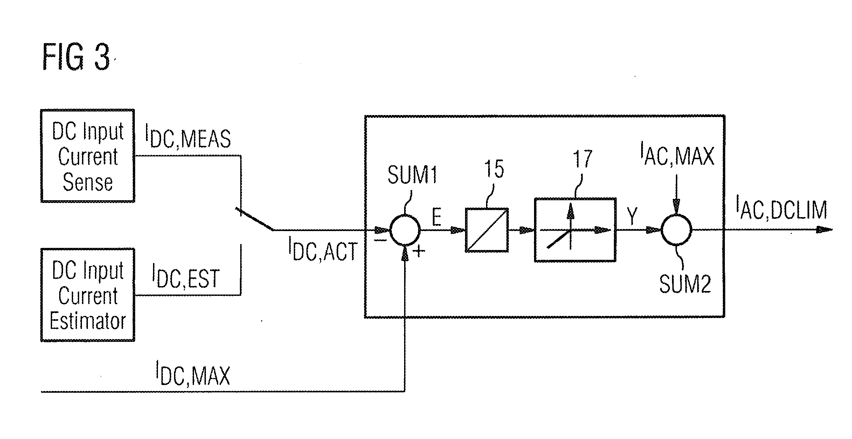

Dieser wird bevorzugt eingesetzt im Rahmen einer Begrenzungseinheit, die anhand der Figur 3 näher erläutert ist, eingesetzt. Er kann jedoch auch für beliebige andere Zwecke eingesetzt werden.

In einer Summierstelle Sum1 wird eine Regeldifferenz E aus der Differenz eines vorgegebenen Maximalwertes $I_{DC,MAX}$ des Gleich-Eingangsstroms und eines aktuellen Gleich-Eingangsstrom $I_{DC,ACT}$ ermittelt. Dem aktuellen Gleich-Eingangsstrom $I_{DC,ACT}$ wird der Schätzwert $I_{DC,EST}$ des Gleich-Eingangsstroms zugeordnet, der in dem Schritt S13 ermittelt wird, oder alternativ kann diesem auch ein Messwert $I_{DC,MEAS}$ des Gleich-Eingangsstroms zugeordnet werden, falls ein entsprechender Stromsensor vorgesehen ist.

Ein Regler 15 ist vorgesehen, dem die Regeldifferenz E eingangsseitig zugeführt ist, und der bevorzugt als Integral-Regler ausgebildet ist. Das Ausgangssignal des Reglers 15 ist an einen Begrenzer 17 eingangsseitig zugeführt, dass so ausgebildet ist, dass ein ausgangsseitig erzeugtes Regelsignal Y keine positiven Werte annehmen kann. Der Maximalwert $I_{DC,MAX}$ des Gleich-Eingangsstroms ist vorgegeben.

Ist die Regeldifferenz E < 0, so reduziert der Regler 15 ausgangsseitig einen Gleich-Grenzwert $I_{AC,DCLIM}$ des Wechselstroms, der in einer weiteren Summierstelle Sum2 durch Summieren des Regelsignals Y und eines vorgegebenen Maximalwertes $I_{AC,MAX}$ des Wechselstroms ermittelt wird.

Durch den so begrenzten Wechselstrom $I_{AC}$ erfolgt eine Rückwirkung auch auf den Gleich-Eingangs-Strom $I_{DC}$, so dass ein stabiler Arbeitspunkt eingenommen wird. Bevorzugt beeinflusst der Gleich-Grenzwert $I_{AC,DCLIM}$ des Wechselstroms einen Sollwert zum Einstellen des d-Motorstroms $I_d$ und/oder des q-Motorstroms Iq.

Hat die Regeldifferenz E einen Wert größer null, so wird das Regelsignal Y in Richtung 0 abgebaut, da der Begrenzer 17 verhindert, dass das Regelsignal Y Werte größer null einnehmen kann.

Durch das Ermitteln des Gleich-Eingangsstroms $I_{DC}$ mittels des Vorgehens gemäß des Ablaufdiagramms der Figur 5 kann auf den Einsatz eines Stromsensors zum Erfassen des Gleich-Eingangsstroms $I_{DC}$ verzichtet werden und somit die gesamte Anordnung kompakter und kostengünstiger ausgebildet werden. Ferner kann so vermieden werden, dass Störungen beim Erfassen des Gleich-Eingangsstroms $I_{DC}$ einen negativen Einfluss auf die Steuerung der elektrischen Maschine 3 haben.

Im Falle eines zusätzlichen Vorhandenseins des Stromsensors zum Erfassen des Gleich-Eingangsstroms kann durch das Ermitteln des jeweiligen Schätzwertes $I_{DC}$ des Gleich-Eingangsstroms eine Diagnose erfolgen durch Vergleich des jeweiligen Schätzwertes $I_{DC,EST}$ und des Messwertes $I_{DC,MEAS}$ des Gleich-Eingangsstroms. Insbesondere bei besonders sicherheitsrelevanten Systemen kann der Beobachter, mittels dessen dann der Schätzwert $I_{DC,EST}$ ermittelt wird, zur Plausibilisierung des Messwertes $I_{DC,MEAS}$ des Gleich-Eingangsstroms eingesetzt werden.

**Patentansprüche**

1. Verfahren zum Betreiben einer elektrischen Maschine (3), bei dem ein Gleich-Eingangsstrom ($I_{DC}$) einer Steuervorrichtung (1), die der elektrischen Maschine (3) zugeordnet ist, mittels eines Beobachters ermittelt wird abhängig von einer Wirkleistungsbilanzierung der elektrischen Maschine (3) und der ihr zugeordneten Steuervorrichtung (1) und Modellierung des Gleichstromteils der Steuervorrichtung (1) mittels eines ohmschen Widerstands ($R_{DC}$) und eines Wechselstromteils der Steuervorrichtung (1) und der elektrischen Maschine (3) mittels jeweiliger ohmscher Widerstände ($R_{AC,ECU}$, $R_{AC,MOT}$), **dadurch gekennzeichnet, dass** bei der Wirkleistungsbilanzierung die Gleich-Eingangswirkleistung $P_{DC}$ (F1) gleich ist einer Summe aus der Gleich-Verbindungs-Verlust-Wirkleistung $P_{ESR}$ (F2), der Gleich-Verlust-Wirkleistung $P_{L,DC}$ (F4) und der Wechsel-Wirkleistung $P_{AC}$ (F8).

2. Verfahren nach Anspruch 1, **dadurch gekennzeichnet, dass** die Gleich-Eingangswirkleistung $P_{DC}$ ein Produkt aus Gleich-Eingangsstrom $I_{DC}$ und der Gleich-Eingangsspannung $U_{DC}$ ist.

3. Verfahren nach Anspruch 1 oder 2, **dadurch gekennzeichnet, dass** die Gleich-Verbindungs-Verlust-Wirkleistung $P_{ESR}$ mit Hilfe der Formel:

$$P_{ESR} = k_{ESR} \cdot \left| U_{DC} \cdot I_{DC} \right|$$

berechnet wird, wobei $k_{ESR}$ ein empirisch ermittelbarer Anteilsfaktor ist.

4. Verfahren nach einem der vorhergehenden Ansprüche, **dadurch gekennzeichnet, dass** die Gleich-Verlust-Wirkleistung $P_{L,DC}$ mit Hilfe der Formel

$$P_{L,DC} = R_{DC} \cdot I_{DC}^{2}$$

berechnet wird.

5. Verfahren nach einem der vorhergehenden Ansprüche, **dadurch gekennzeichnet, dass** die Wechsel-Wirkleistung $P_{AC}$ eine Summe der inneren Wirkleistung $P_{I,AC}$ (F12) und der Wechsel-Verlust-Wirkleistung $P_{L,AC}$ (F6) ist.

6. Verfahren nach einem der vorhergehenden Ansprüche, **dadurch gekennzeichnet, dass** die Wirkleistungsbilanzierung einen Leistungsanteil umfasst, der einen vorgegebenen Anteil einer Gleich-Eingangswirkleistung $P_{DC}$ (F1) der Steuervorrichtung (1) umfasst.

7. Verfahren nach einem der vorstehenden Ansprüche, **dadurch gekennzeichnet, dass** der ohmsche Widerstand ($R_{DC}$), der zur Modellierung des Gleichstromteils der Steuervorrichtung (1) vorgesehen ist, abhängig von einer Temperatur ermittelt wird.

8. Verfahren nach einem der vorstehenden Ansprüche, **dadurch gekennzeichnet, dass** der jeweilige ohmsche Widerstand ($R_{AC,ECU}$) , der zur Modellierung des Wechselstromteils der Steuervorrichtung (1) vorgesehen ist, abhängig von einer Temperatur der Steuervorrichtung (1) ermittelt wird.

9. Verfahren nach einem der vorstehenden Ansprüche, **dadurch gekennzeichnet, dass** der jeweilige ohmsche Widerstand ($R_{AC,MOT}$), der zur Modellierung der elektrischen Maschine (3) vorgesehen ist, abhängig von der Temperatur der elektrischen Maschine (3) ermittelt wird.

10. Vorrichtung zum Betreiben einer elektrischen Maschine, die dazu ausgebildet ist, einen Gleich-Eingangsstrom ($I_{DC}$) einer Steuervorrichtung (1), die der elektrischen Maschine (3) zugeordnet ist, mittels eines Beobachters zu ermitteln und zwar abhängig von einer Wirkleistungsbilanzierung der elektrischen Maschine (3) und der ihr zugeordneten Steuervorrichtung (1) und Modellierung des Gleichstromteils der Steuervorrichtung (1) mittels eines ohmschen Widerstands ($R_{DC}$) und eines Wechselstromteils der Steuervorrichtung (1) und der elektrischen Maschine (3) mittels jeweiliger ohmscher Widerstände ($R_{AC,ECU}$. $R_{AC,MOT}$), **dadurch gekennzeichnet, dass** bei der Wirkleistungsbilanzierung die Gleich-Eingangswirkleistung $P_{DC}$ (F1) gleich ist einer Summe aus der Gleich-Verbindungs-Verlust-Wirkleistung $P_{ESR}$ (F2), der Gleich-Verlust-Wirkleistung $P_{L,DC}$ (F4) und der Wechsel-Wirkleistung $P_{AC}$ (F8).

**Claims**

1. Method for operating an electrical machine (3), in which method a DC input current ($I_{DC}$) of a control apparatus (1), which apparatus is associated with the electrical machine (3), is determined by means of an observer as a function of balancing the real power of the electrical machine (3) and the control apparatus (1) which is associated with the said electrical machine, and modelling the DC component of the control apparatus (1) by means of a resistance ($R_{DC}$) and modelling an AC component of the control apparatus (1) and the electrical machine (3) by means of respective resistances ($R_{AC,ECU}$, $R_{AC,MOT}$), **characterized in that**, when the real power is balanced, the real DC input power $P_{DC}$ (F1) is equal to a sum of the real DC connection power loss $P_{ESR}$ (F2), the real DC power loss $P_{L,DC}$ (F4) and the real AC power $P_{AC}$ (F8).

2. Method according to Claim 1, **characterized in that** the real DC input power $P_{DC}$ is a product of the DC input current $I_{DC}$ and the DC input voltage $U_{DC}$.

3. Method according to Claim 1 or 2, **characterized in that** the real DC connection power loss $P_{ESR}$ is calculated using the formula:

$$P_{ESR} = k_{ESR} \cdot \left| U_{DC} \cdot I_{DC} \right| ,$$

where $k_{ESR}$ is a proportionality factor which can be determined empirically.

**4.** Method according to one of the preceding claims, **characterized in that** the real DC power loss $P_{L,DC}$ is calculated using the formula:

$$P_{L,DC} = R_{DC} \cdot I^2_{DC}.$$

**5.** Method according to one of the preceding claims, **characterized in that** the real AC power $P_{AC}$ is a sum of the internal real power $P_{I,AC}$ (F12) and the real AC power loss $P_{L,AC}$ (F6).

**6.** Method according to one of the preceding claims, **characterized in that** balancing of the real power involves a power component which comprises a predefined component of a real DC input power $P_{DC}$ (F1) of the control apparatus (1).

**7.** Method according to one of the preceding claims, **characterized in that** the resistance ($R_{DC}$), which is provided for modelling the DC component of the control apparatus (1), is determined as a function of a temperature.

**8.** Method according to one of the preceding claims, **characterized in that** the respective resistance ($R_{AC,ECU}$)' which is provided for modelling the AC component of the control apparatus (1), is determined as a function of a temperature of the control apparatus (1).

**9.** Method according to one of the preceding claims, **characterized in that** the respective resistance ($R_{AC, MOT}$) , which is provided for modelling the electrical machine (3), is determined as a function of the temperature of the electrical machine (3).

**10.** Apparatus for operating an electrical machine which is designed to determine a DC input current ($I_{DC}$) of a control apparatus (1), which is associated with the electrical machine (3), by means of an observer, specifically as a function of balancing the real power of the electrical machine (3) and the control apparatus (1) which is associated with the said electrical machine, and modelling the DC component of the control apparatus (1) by means of a resistance ($R_{DC}$) and modelling an AC component of the control apparatus (1) and the electrical machine (3) by means of respective resistances ($R_{AC,ECU}$, $R_{AC,MOT}$) , **characterized in that**, when the real power is balanced, the real DC input power $P_{DC}$ (F1) is equal to a sum of the real DC connection power loss $P_{ESR}$ (F2), the real DC power loss $P_{L,DC}$ (F4) and the real AC power $P_{AC}$ (F8).

## Revendications

**1.** Procédé permettant de faire fonctionner une machine électrique (3), au cours duquel un courant continu d'entrée ($I_{DC}$) d'un dispositif de commande (1), qui est affecté à la machine électrique (3), est déterminé à l'aide d'un observateur en fonction d'un bilan de puissance effective de la machine électrique (3) et du dispositif de commande (1), qui lui est affecté, et par modélisation de la composante en courant continu du dispositif de commande (1) au moyen d'une résistance ohmique ($R_{DC}$) et d'une composante en courant alternatif du dispositif de commande (1) et de la machine électrique (3) au moyen de résistances ohmiques respectives ($R_{AC,ECU}$, $R_{AC,MOT}$) , **caractérisé par le fait que**, pour le bilan de puissance effective, la puissance effective continue d'entrée $P_{DC}$ (F1) est égale à la somme de la puissance effective de perte de la liaison en continu $P_{ESR}$ (F2), de la puissance effective continue de perte $P_{L,DC}$ (F4) et de la puissance effective en alternatif $P_{AC}$ (F8).

**2.** Procédé selon la revendication 1, **caractérisé par le fait que** la puissance effective continue d'entrée $P_{DC}$ est un produit de l'intensité du courant continu d'entrée $I_{DC}$ et de la tension continue d'entrée $U_{DC}$.

**3.** Procédé selon la revendication 1 ou 2, **caractérisé par le fait que** la puissance effective de perte $P_{ESR}$ de la liaison en continu est calculée à l'aide de la formule:

$$P_{ESR} = k_{ESR} \cdot \left| U_{DC} \cdot I_{DC} \right| ,$$

dans laquelle $k_{ESR}$ est un facteur proportionnel déterminé d'une façon empirique.

**4.** Procédé selon l'une des revendications précédentes, **caractérisé par le fait que** la puissance effective continue de perte $P_{L.DC}$ est calculée à l'aide de la formule:

$$P_{L.DC} = R_{DC} \cdot I^2_{DC} .$$

**5.** Procédé selon l'une des revendications précédentes, **caractérisé par le fait que** la puissance effective en alternatif $P_{AC}$ est une somme de la puissance effective interne $P_{I.AC}$ (F12) et de la puissance effective de perte en alternatif $P_{L.AC}$ (F6) .

**6.** Procédé selon l'une des revendications précédentes, **caractérisé par le fait que** le bilan de la puissance effective comprend une composante de puissance qui comprend une fraction donnée d'une puissance continue effective d'entrée $P_{DC}$ (F1) du dispositif de commande (1).

7. Procédé selon l'une des revendications précédentes, **caractérisé par le fait que** la résistance ohmique ($R_{DC}$), qui est prévue pour la modélisation de la composante en courant continu du dispositif de commande (1), est déterminée en fonction d'une température.

8. Procédé selon l'une des revendications précédentes, **caractérisé par le fait que** la résistance ohmique respective ($R_{AC,ECU}$), qui est prévue pour la modélisation de la composante en courant alternatif du dispositif de commande (1), est déterminée en fonction d'une température du dispositif de commande (1).

9. Procédé selon l'une des revendications précédentes, **caractérisé par le fait que** la résistance ohmique respective ($R_{AC,MOT}$), qui est prévue pour la modélisation de la machine électrique (3), est déterminée en fonction de la température de la machine électrique (3).

10. Dispositif permettant de faire fonctionner une machine électrique, lequel dispositif est conçu pour déterminer, à l'aide d'un observateur, un courant continu d'entrée ($I_{DC}$) d'un dispositif de commande (1), qui est affecté à la machine électrique (3), et ceci en fonction d'un bilan de puissance effective de la machine électrique (3) et du dispositif de commande (1), qui lui est affecté, et d'une modélisation de la composante en courant continu du dispositif de commande (1) au moyen d'une résistance ohmique ($R_{DC}$) et d'une composante en courant alternatif du dispositif de commande (1) et de la machine électrique (3) au moyen de résistances ohmiques respectives ($R_{AC,ECU}$, $R_{AC.MOT}$), **caractérisé par le fait que**, pour le bilan de puissance effective, la puissance continue effective d'entrée $P_{DC}$ (F1) est égale à la somme de la puissance effective de perte $P_{ESR}$ de la liaison en continu (F2), de la puissance effective de perte en continu $P_{L.DC}$ (F4) et de la puissance effective en alternatif $P_{AC}$ (F8).

## FIG 1

## FIG 2

FIG 3

EP 1 959 552 B1

# FIG 4

$$P_{DC} = U_{DC} \cdot I_{DC} \quad (F1)$$

$$P_{ESR} = k_{ESR} \cdot P_{DC} = k_{ESR} \cdot | U_{DC} \cdot I_{DC} | \quad (F2)$$

$$P_{L,DC} = R_{DC} \cdot I^2_{DC} \quad (F4)$$

$$P_{L,AC} = \frac{3}{2} \cdot R_{AC} \cdot I^2_{AC} = R_{AC} \cdot (I^2_d + I^2_q) \quad (F6)$$

$$R_{AC} = R_{AC,ECU} + R_{AC,MOT} \quad (F8)$$

$$I_{AC} = \sqrt{I^2_d + I^2_q} \quad (F10)$$

$$P_{I,AC} = \frac{3}{2} \cdot \omega_{el} \cdot (\Psi + (L_d - L_q) \cdot I_d) \cdot I_q \quad (F12)$$

$$P_{I,AC} = \frac{3}{2} \cdot \omega_{el} \cdot \Psi \cdot I_q \quad (F14)$$

$$P_{AC} = P_{L,AC} + P_{I,AC} \quad (F16)$$

$$P_{DC} = P_{ESR} + P_{L,DC} + P_{L,AC} + P_{I,AC} = P_{ESR} + P_{L,DC} + P_{AC} \quad (F18)$$

$$I_{DC} = \frac{U_{DC} \cdot (1 - k_{ESR})}{2 \cdot R_{DC}} + \sqrt{\frac{U^2_{DC} \cdot (1 - k_{ESR})^2}{4 \cdot R^2_{DC}} - \frac{P_{AC}}{R_{DC}}} \quad (F20)$$

$$P_{AC} = P_{L,AC} + P_{I,AC} = P_{DC} - P_{ESR} - P_{L,DC} \quad (F22)$$

$$I_{DC} = \frac{U_{DC} \cdot (1 + k_{ESR})}{2 \cdot R_{DC}} - \sqrt{\frac{U^2_{DC} \cdot (1 + k_{ESR})^2}{4 \cdot R^2_{DC}} + \frac{P_{AC}}{R_{DC}}} \quad (F24)$$

$$p = -\frac{U_{DC} \cdot (1 - \text{sgn}(P_{AC}) \cdot k_{ESR})}{R_{DC}} \quad (F26)$$

$$s = \frac{P_{AC}}{R_{DC}} \quad (F28)$$

$$I_{DC} = -\frac{p}{2} - \sqrt{\frac{p^2}{4} - s} \quad (F30)$$

# FIG 5

```
                    ┌─────────────┐
                   ╱   Start       ╲───S1
                    ╲─────────────╱
                          │
                          ▼
                    ┌──────────┐
                    │  U_DC    │───S3
                    └──────────┘
                          │
                          ▼
              ┌────────────────────────┐
              │ R_DC, R_AC, K_ESR      │───S5
              └────────────────────────┘
                          │
                          ▼
                    ┌──────────┐
                    │  I_AC    │───S7
                    └──────────┘
                          │
                          ▼
              ┌────────────────────────┐
              │ L_d, L_q, ω_el, Ψ      │───S9
              └────────────────────────┘
                          │
                          ▼
              ┌────────────────────────┐
              │ P_I,AC, P_L,AC, P_AC   │───S11
              └────────────────────────┘
                          │
                          ▼
                    ┌──────────┐
                    │  I_DC    │───S13
                    └──────────┘
```

**EP 1 959 552 B1**

**IN DER BESCHREIBUNG AUFGEFÜHRTE DOKUMENTE**

**In der Beschreibung aufgeführte Patentdokumente**

- US 5998880 A